Europäisches Patentamt

European Patent Office

Office européen des brevets

(19)

(11) **EP 1 498 451 A1**

(12) **EUROPEAN PATENT APPLICATION**
published in accordance with Art. 158(3) EPC

| | |
|---|---|
| (43) Date of publication:<br>**19.01.2005 Bulletin 2005/03** | (51) Int Cl.7: **C08L 7/00**, C08L 9/00,<br>C08K 5/00, C08K 5/17,<br>C01C 1/10 |
| (21) Application number: **03723181.8** | |
| (22) Date of filing: **23.04.2003** | (86) International application number:<br>**PCT/JP2003/005197** |
| | (87) International publication number:<br>**WO 2003/091326 (06.11.2003 Gazette 2003/45)** |

| | |
|---|---|
| (84) Designated Contracting States:<br>**AT BE BG CH CY CZ DE DK EE ES FI FR GB GR HU IE IT LI LU MC NL PT RO SE SI SK TR** | (72) Inventors:<br>• **IWAFUNE, Seiichiro, Bridgestone Corporation Kodaira-shi,Tokyo 187-8531 (JP)**<br>• **MAEDA, Hiromi, Bridgestone Corporation Kodaira-shi, Tokyo 187-8531 (JP)** |
| (30) Priority: **23.04.2002 JP 2002121109**<br>**23.04.2002 JP 2002121110** | (74) Representative: **Whalley, Kevin**<br>**MARKS & CLERK,**<br>**57-60 Lincoln's Inn Fields**<br>**London WC2A 3LS (GB)** |
| (71) Applicant: **Bridgestone Corporation Tokyo 104-8340 (JP)** | |

(54) **RUBBER COMPOSITIONS CONTAINING RUBBER-CONTAINING COAGULUMS AND PROCESSES FOR PRODUCTION OF THE COAGULUMS**

(57)     Provided are a rubber composition in which a component having a vulcanization scorching property which has so far exerted an adverse effect is reduced to display the physical properties of a natural rubber at maximum and in which blended is a rubber component-containing coagulated matter containing a serum (serum component) of the natural rubber which is a useful component such as an aging resistant component which has not so far been introduced into a natural rubber and a production process for the above rubber component-containing coagulated matter.

The rubber composition blended with the rubber component-containing coagulated matter includes a rubber composition, wherein a rubber component is blended, and the rubber component comprises a component (A) comprising at least one of a natural rubber and a diene base synthetic rubber and a component (B) comprising a rubber component-containing coagulated matter obtained by drying and coagulating a serum of natural rubber obtained by centrifugally separating a natural rubber latex.

EP 1 498 451 A1

**Description**

Technical Field

The present invention relates to a rubber composition blended with a rubber component-containing coagulated matter which is reduced in a component exerting an adverse effect on a rubber component contained in a serum of natural rubber and which makes effective use of a useful component providing an aging resistant effect, a production process for the rubber component-containing coagulated matter, and a rubber composition comprising a rubber component containing a natural rubber mixture introducing a useful component contained in a serum of natural rubber which has not so far been introduced into natural rubber and a production process for a rubber component-coagulated matter which is the natural rubber mixture described above.

Background Art

In general, natural rubber is produced in tropical countries such as Thailand, Malaysia and Indonesia. Natural rubber is widely used in a large quantity in the rubber industry and the tire industry because of excellent physical properties thereof.
Natural rubber is produced in the order of steps of tapping-coagulation-washing (washing with water)-dehydration-drying-packing, and it is classified into some kinds and grades.
In respect to a production process for natural rubber, natural rubber has so far been classified roughly into ribbed smoked sheet (RSS) and technically specified rubber (TSR) according to grading in International standards of Quality and Packing for Natural Rubber Grader (green book in a common name) for various grade products of natural rubber.
In RSS, a rubber component in a natural rubber latex gathered after tapping is coagulated (USS) by an acid and separated into a rubber component (solid rubber), a serum component (natural rubber serum) and a deposit. The solid rubber is washed with water and dehydrated, and then is dried at about 60°C for 5 to 7 days (smoking). In TRS, a rubber component in a natural rubber latex gathered after tapping is spontaneously coagulated (CL) and separated into a rubber component (solid rubber), a serum component (natural rubber serum) and a deposit. The solid rubber is washed with water and dehydrated, and then is dried by hot air at 110 to 140°C for several hours.
In the respective processes described above, alkali such as ammonia is added as a stabilizer to a gathered natural rubber latex in a certain case before coagulation.
In the respective processes described above, a serum component (natural rubber serum) and a deposit remaining after obtained a crude rubber (solid rubber) have so far been wasted in rivers without being utilized to cause water pollution.
Contained in the serum component (natural rubber serum) described above are components useful for a rubber component and components exerting an adverse effect thereon including inositol, carbohydrates, proteins such as $\alpha$ -globulin, sugars, ammonia sources, minerals, glutathione, enzymes and nucleic acid, and it has so far been known that a component having an aging resistant effect is contained as well therein.
It is known that a serum (serum component) obtained after coagulated with an acid in a conventional process has so far been utilized for a modifier and a fertilizer, but it has been found from our investigations that the effect is small as compared with that in a direct drying process in which direct drying is carried out without taking an acid coagulation step.
However, when a serum component obtained by a direct drying method is used as an additive for a rubber composition, a problem resides in that a scorching property is deteriorated very much in vulcanization and that a freedom in blending is lost. Further, when using the serum component, a problem resides in that curing reaction in storage is accelerated to make it difficult to maintain the stable physical properties (viscosity and the like) of the product for a long period of time.
On the other hand, when comparing a serum obtained after coagulated with an acid with a serum directly coagulated, the serum directly coagulated is excellent in heat aging resistance in a long term.
However, rubber containing a serum component has a problem in that it has a too quick vulcanizing speed, and it has to be improved further more.
On the other hand, natural rubber is characterized by low heat build-up, and this is an important factor required from a case member of a tire and a base rubber of a tread. Rubber having low heat build-up exceeding that of RSS is desired, but the existing situation is that this problem is not overcome in conventional natural rubber production processes.
Accordingly, at present that is met by a measure in blending, use of a loss-reducing agent and kneading conditions. If low fuel consumption is pursued for fossil energy saving, needs therefor shall grow large.
The present invention intends to solve the problems on the conventional techniques described above, and the first object is to provide a rubber composition in which in order to make effective use of a serum component (natural rubber serum) which is a useful component contained in natural rubber gathered and has an aging resistant effect, blended is a rubber component-containing coagulated matter making effective use of a serum (serum component) of natural rubber which has not so far been introduced into a natural rubber and which is improved in a scorching property in vulcanization that has so far been exerted an adverse effect to exhibit the physical properties of natural rubber at maximum and a production process for the above rubber component-containing coagulated matter. Further, the second object of the present invention is to provide a rubber composition in which a component accelerating a vulcanizing speed is further reduced while keeping a component for improving heat aging resistance over a long period of time that is contained in a serum (natural rubber serum) which has not so far been introduced into natural rubber and in which blended is a rubber component comprising a natural rubber mixture having excellent characteristics and a production process for a rubber component-coagulated matter which is the natural rubber mixture described above.

Disclosure of the Invention

Intensive researches repeated by the present inventors in order to solve the problems of the conventional art described above have resulted in succeeding in obtaining a rubber composition blended with a rubber component-containing coagulated matter of the first object described above by adding as a rubber component, a component (A) comprising at least one of a natural rubber and a diene base synthetic rubber and a rubber component-containing coagulated matter obtained from a gathered natural rubber latex by a specific process and a production process for the rubber component-containing coagulated matter, and thus the present first invention has come to be completed. Further, they have succeeded in obtaining a rubber composition of the second object described above having excellent characteristics by adding to a rubber component, a natural rubber mixture obtained by coagulating a natural rubber latex containing a serum component gathered after tapping at a specific temperature or higher, then turning it into crumbs and drying and a production process for the rubber component-containing coagulated matter described above, and thus the present second invention has come to be completed.

That is, the present invention (the first invention and the second invention) comprises the following items (1) to (16).

(1) A rubber composition blended with a rubber component-containing coagulated matter, wherein a rubber component is blended, and the rubber component comprises a component (A) comprising at least one of a natural rubber and a diene base synthetic rubber and a component (B) comprising a rubber component-containing coagulated matter obtained by drying and coagulating a serum of natural rubber obtained by centrifugally separating a natural rubber latex.

(2) The rubber composition blended with a rubber component-containing coagulated matter as described in the above item (1), wherein the component (A) described above is at least one selected from the group consisting of a natural rubber, an isoprene rubber, a styrene-butadiene copolymer rubber, a styrene-isoprene copolymer rubber and a butadiene rubber.

(3) The rubber composition blended with a rubber component-containing coagulated matter as described in the above item (1) or (2), wherein an amount of the component (B) described above is 0.5 to 40 % by weight based on the whole rubber components.

(4) The rubber composition blended with a rubber component-containing coagulated matter as described in any of the above items (1) to (3), wherein the component (A) described above is the styrene-isoprene copolymer rubber, and an amine base antioxidant is further blended.

(5) A rubber composition, wherein a rubber component comprising a natural rubber is blended, and at least a part of the natural rubber is a natural rubber mixture [component (C)] obtained by coagulating a natural rubber latex at 90°C or higher, then turning it into crumbs and drying.

(6) The rubber composition as described in the above item (5), wherein the rubber component described above further comprises a diene base synthetic rubber.

(7) The rubber composition as described in the above item (5) or (6), wherein the diene base synthetic rubber described above is at least one selected from the group consisting of an isoprene rubber, a styrene-butadiene copolymer rubber and a butadiene rubber.

(8) The rubber composition as described in any of the above items (5) to (7), wherein an amount of the component (C) described above is 0.5 to 100 % by weight based on the whole rubber components.

(9) The rubber composition as described in any of the above items (5) to (8), wherein a viscosity stabilizer for a natural rubber is further added to the component (C) described above.

(10) The rubber composition as described in the above item (9), wherein the viscosity stabilizer for a natural rubber described above is a hydrazide compound represented by the following Formula (I):

$$R-CONHNH_2 \hspace{6cm} (I)$$

wherein R in Formula (I) represents an alkyl group having 1 to 30 carbon atoms, a cycloalkyl group having 3 to 30 carbon atoms or an aryl group.

(11) A production process for a rubber component-containing coagulated matter, comprising a step of centrifugally separating a natural rubber latex, a step of coagulating a resulting serum and a step of drying the coagulated serum.

(12) A production process for a rubber component-containing coagulated matter, comprising a step of coagulating a natural rubber latex by vaporization, a step of turning a resulting coagulated matter into crumbs and a step of drying the coagulated matter turned into crumbs.

(13) The production process for a rubber component-containing coagulated matter as described in the above item (11) or (12), wherein the coagulating step described above is carried out by means of any of a thin film distillation dryer, a drum dryer and a belt dryer.

(14) The production process for a rubber component-containing coagulated matter as described in any of the above items (11) to (13), wherein the coagulating step described above is carried out at 90°C or higher.

(15) The production process for a rubber component-containing coagulated matter as described in any of the above items (11) to (14), wherein the drying step described above is carried out by means of a bucket type dryer or a belt type dryer.

(16) The production process for a rubber component-containing coagulated matter as described in any of the above items (11) to (15), further comprising a creper step and/or a shredder step.

Best Mode for Carrying Out the Invention

The modes for carrying out the first invention and the second invention shall be explained below in details about each invention.

The rubber composition of the first invention is characterized in that it is blended with a rubber component and that the rubber component comprises the component (A) comprising at least one of a natural rubber and a diene base synthetic rubber and the component (B) comprising a rubber component-containing coagulated matter obtained by drying and coagulating a serum of natural rubber obtained by centrifugally separating a natural rubber latex.

The production process for a rubber component-containing coagulated matter which is the component (B) in the first invention is characterized by comprising a step of centrifugally separating a natural rubber latex, a step of coagulating the resulting serum and a step of drying the coagulated serum.

The component (A) in the first invention comprises at least one of a natural rubber and a diene base synthetic rubber (each alone or a mixture thereof, hereinafter the same shall apply).

The natural rubber which can be used shall not specifically be restricted, and various natural rubbers of the respective grades such as RSS, TSR and the like can be used.

The synthetic rubber which can be used shall not specifically be restricted, and various synthetic rubbers can be used. Diene base synthetic rubbers are preferred as the synthetic rubber, and among them, at least one selected from the group consisting of an isoprene rubber (IR), a styrene-butadiene copolymer rubber (SBR), a butadiene rubber (BR) and a styrene-isoprene copolymer rubber (SIR) is given from the viewpoint of improving heat resistance.

The component (B) in the first invention comprises a rubber component-containing coagulated matter obtained by drying and coagulating a serum of natural rubber obtained by centrifugally separating a natural rubber latex. The rubber component-containing coagulated matter can be obtained by taking a step of centrifugally separating a natural rubber latex, a step of coagulating the resulting serum and a step of drying the coagulated serum.

The natural rubber latex which is the raw material includes a natural rubber latex itself gathered by tapping or a natural rubber latex which is stabilized by adding an alkali such as ammonia.

These natural rubber lattices are used to extract a serum (serum component) of natural rubber which has not been introduced into the natural rubber and which is a useful component by centrifugally separating by means of a centrifugal separator.

The centrifugal separator includes, for example, a continuous type centrifugal separator and the like, and in respect to a centrifugal separation condition, it may be rotated at a Ga revolution number of about 6500 to 7500.

The coagulation step for coagulating the resulting serum (serum component) is carried out in order to obtain a solid before drying, and it can be carried out by means of any of a thin film distillation dryer, a drum dryer and a belt dryer.

The usable thin film distillation dryer includes a vertical Hi-Evaolator manufactured by Sakura Seisakusho, Ltd.

Also, the drum dryer has, for example, blades on the surface of a roll whose inside is heated by means of steam or an electric heater and is equipped with a device which adds continuously dropwise the latex on the blades, and to be specific, it includes a dual shaft type drum dryer in which a natural rubber latex or a pre-heated natural rubber latex is continuously dried.

Further, the belt dryer is equipped with, for example, a blower and heating device such as a heater over an endless conveyor belt or heaters over and below the endless conveyer belt so that the heaters interpose it, and a natural rubber latex is thinly spread on the conveyor belt to be continuously dried.

A temperature at which a natural rubber latex is coagulated by means of a dryer such as the drum dryer described above in the first invention is 90°C or higher, preferably 110 to 135°C, and time for coagulation is 5 minutes or shorter, preferably 2 minutes or shorter. If the temperature for coagulation by vaporization is lower than 90°C, the coagulated matter is increased in a moisture content, and effective ingredients in the serum are discharged in the course of processing. Accordingly, it is not preferred.

A step of drying the coagulated serum obtained at the step described above is carried out in order to deactivate a vulcanization-accelerating substance at a step of redrying, and it can be carried out by means of, for example, a bucket type dryer or a belt type dryer.

The bucket type dryer includes, for example, a conventional dryer used for producing TSR, to be specific, Single Box Dryer Model CRDS manufactured by SPHERE Co., Ltd.

Further, the belt type dryer includes a conveyor type dryer, for example, the dryer equipped with a far infrared device or a microwave device.

The coagulated matter described above is preferably dried so that a moisture content of the natural rubber mixture is reduced to preferably 1.5 % or lower, more preferably 0.8 % or lower from the viewpoints of kneading stability and physical property stability of the blended rubber.

In the present first invention, the coagulated matter coagulated at the coagulation step described above is preferably subjected to a creper step and/or a shredder step in terms of uniform drying before drying the coagulated matter, and the effective ingredients are preferably inhibited from being discharged with water at the respective steps.

The creper step includes, for example, subjecting the coagulated matter to the creper several times without washing with water.

The shredder step includes collecting the rubber after subjecting to the shredder without using a water bath.

In the rubber composition of the first invention, the rubber component-containing coagulated matter (component B) obtained above has a content controlled to 0.5 to 40 % by weight, preferably 3 to 30 % by weight and more preferably 5 to 20 % by weight based on the total amount of the whole rubber components.

If the above rubber component-containing coagulated matter (component B) has a content of less than 0.5 % by weight, the heat aging resistance-improving effect is lost, and if it has a content of exceeding 40 % by weight, the fractural physical properties are reduced. Accordingly, both ranges are not preferred.

In the rubber composition of the first invention, the component (A) is preferably an isoprene rubber and further blended with an amine base antioxidant from the viewpoint of continuance of the aging resistant effect

The amine base antioxidant includes, for example, amine ketone base antioxidants such as a 2,2,4-trimethyl-1,2-dihydroquinoline polymer and 6-ethoxy-2,2,4-trimethyl-1,2-dihydroquinoline, diarylamine base antioxidants such as p,p'-dioctyldiphenylamine and p,p'-dicumyldiphenylamine and p-phenylenediamine base antioxidants such as N,N'-diphenyl-p-phenylenediamine, N-phenyl-N'-isopropyl-p-phenylenediamine and N-phenyl-N'-1,3-dimethylbutyl-p-phenylenediamine.

In the first invention thus constituted, the rubber component comprises the component (A) comprising at least one of the natural rubber and the diene base synthetic rubber each described above and the component (B) comprising the rubber component-containing coagulated matter obtained by drying and coagulating the serum of natural rubber obtained by centrifugally separating the natural rubber latex described above, whereby obtained is a rubber composition blended with a rubber component-containing coagulated matter containing a serum (serum component) of natural rubber which is a useful component but has not been introduced into the natural rubber and improved in the scorch property in vulcanization that has so far been exerted an adverse effect to exhibit the physical properties of the natural rubber at maximum, and also obtained is a production process for the above rubber component-containing coagulated matter. That makes it possible to make effective use of a serum component (serum component) contained in a natural rubber gathered which is a useful component exerting an aging resistant effect and the like without polluting the environment.

That is, in the first invention, the rubber composition comprising the intended rubber component-containing coagulated matter can be obtained by carrying out the drying step of a serum (serum component) obtained from a natural rubber latex at two stages; the first stage being a drying-coagulating process for taking out a natural rubber (NR) contained at about 5% in the serum component in the form of a coagulated matter by drying, and the second stage being a drying step by means of a dryer, in which preferably drying is carried out after subjecting to a creper or a shredder.

In the drying step described above, non-dried crumbs are obtained without carrying out washing with water in the creper or the shredder, which is different from a usual case. Sufficient decomposition of a lipid component which accelerates a vulcanizing speed and exerts an adverse effect on the rubber component can be accelerated by carrying out no quick drying to reduce the adverse effect component. A temperature in the drying step described above exerts less effects on a natural aging resistant component.

Further, in the first invention, the heat aging resistance can further be improved for a long time by adding the rubber component-containing coagulated matter of the component (B). Usually, an amine base, particularly p-phenylenediamine base compound is widely used as an antioxidant for rubber, but an aging resistant effect thereof is reduced and lost by heat aging over a long period of time. In the present invention, the heat aging resistance can be improved for a further long time by adding the coagulated matter (component B) of the centrifugally separated serum. That is, in the rubber composition containing the coagulated matter of the first invention, use of the coagulated matter for a blended polymer containing a p-diphenylamine base antioxidant in a range of a specific amount allows an effect for maintaining the fractural characteristic after aging for a long time to be exerted and allows the vulcanization-accelerating effect to fall in a usable range. Further, even if an adding amount of these amine base antioxidants is reduced, the equal or higher long-term heat aging resistance can be obtained, which is useful for effective and practical use of the resources.

Further, in the first invention, the heat build-up lower than that of a conventional composition using a natural rubber such as RSS is displayed, and the heat aging resistance displayed over a long period of time is given. The whole or partial substitution of the rubber composition of the present invention for conventional NR makes it possible to improve the heat build-up and the heat resistance. That is, a resin component is removed by centrifugal separation in the present invention, whereby the heat build-up which is not so low in the conventionally prepared NR is recovered to be close to that of RSS. Use of the portion condensed by centrifugal separation gives a heat build-up falling in the same level as that of RSS when it is coagulated with an acid and further, gives rubber having a good heat build-up when the condensed portion is coagulated with direct coagulation without using an acid.

Further, in the present first invention, the rubber component-containing coagulated matter having the characteristics described above can be produced by a simple process.

The rubber composition of the first invention can be blended, if necessary, with optional components such as a filler, a reinforcing agent, a softener, a vulcanizing agent, a vulcanization accelerator, a vulcanization accelerator activator, an antioxidant and a resin. It can suitably be used for various rubber products including a rubber for a tire.

Next, the rubber composition of the second invention is blended with a rubber component comprising a natural rubber, wherein at least a part of the natural rubber is a natural rubber mixture [component (C)] obtained by coagulating a natural rubber latex at 90°C or higher, then turning it into crumbs and drying. Further, the production process for the rubber component-containing coagulated matter of the second invention is characterized by comprising a step of coagulating a natural rubber latex by vaporization, a step of turning the resulting coagulated matter into crumbs and a step of drying the crumbs of the coagulated matter.

The rubber component in the second invention has to comprise a natural rubber, and the natural rubber has to contain the natural rubber mixture [component (C)] obtained by coagulating a natural rubber latex at 90°C or higher, then turning it into crumbs and drying.

Various synthetic rubbers in addition to the natural rubber containing the natural rubber mixture [component (C)] described above can be used for the rubber component in the second invention. A diene base synthetic rubber is preferably used in terms of compatibility between polymers.

The usable diene base synthetic rubber includes, for example, at least one selected from the group consisting of an isoprene rubber, a styrene-butadiene copolymer rubber, a butadiene rubber and a styrene-isoprene copolymer rubber, and it is preferably at least one selected from the group consisting of an isoprene rubber, a styrene-butadiene copolymer rubber and a butadiene rubber from the viewpoint of improvement in the heat resistance.

The natural rubber mixture [component (C)] in the second invention can be obtained by coagulating a natural rubber latex containing a serum liquid (natural rubber serum) at 90°C or higher without coagulating the natural rubber latex gathered after tapping with an acid, then turning it into crumbs and drying. To be specific, it can be obtained by subjecting to a step of coagulating a natural rubber latex by vaporization, a step of turning the resulting coagulated matter into crumbs and a step of drying the crumbs of the coagulated matter.

The natural rubber latex used in the second invention includes a natural rubber latex itself gathered after tapping, a natural rubber latex stabilized by adding an alkali such as ammonia and a condensed natural rubber latex centrifugally separated by means of a centrifugal separator. A rubber concentration (dried rubber content: DRC) thereof is 5 wt % or more in terms of a solid.

A means (a step of coagulating by vaporization) for coagulating these natural rubber lattices is taken in order to introduce a useful serum liquid (natural rubber serum) into a natural rubber, and it can be carried out by means of any of a thin film distillation dryer, a drum dryer and a belt dryer.

In the second invention, a temperature at which a natural rubber latex is coagulated by vaporization by means of a dryer is 90°C or higher, preferably 110 to 135°C, and a time for coagulation is 5 minutes or shorter, preferably 2 minutes or shorter. If the temperature for coagulation by vaporization is lower than 90°C, the coagulated matter is increased in a moisture content, and the serum effective ingredient is discharged in the course of processing. Accordingly, it is not preferred.

A means (a step of turning into crumbs) for turning the coagulated matter obtained at the step of coagulating the natural rubber latex by vaporization into crumbs described above is taken for uniform drying, and it can be carried out by subjecting to, for example, a creper step and/or a shredder step. The effective ingredients are preferably inhibited from being discharged with water at the respective steps.

The creper step includes, for example, subjecting the coagulated matter to a creper several times without using water.

The shredder step includes collecting the rubber after subjecting to a shredder without using a water bath.

Then, a means (a step of drying the crumbs of the coagulated matter) of drying the coagulated matter turned into crumbs is taken in order to deactivate a vulcanization-accelerating substance by redrying, and it can be carried out by means of, for example, a bucket type dryer or a belt type dryer.

The bucket type dryer includes, for example, a conventional dryer used for producing TSR, to be specific, Single Box Dryer Model CRDS manufactured by SPHERE Co., Ltd.

Further, the belt type dryer includes a conveyor type dryer, for example, the dryer equipped with a far infrared device or a microwave device.

The coagulated matter turned into crumbs is preferably dried so that a moisture content of the natural rubber mixture is reduced to preferably 1.5 % or lower, more preferably 0.8 % or lower from the viewpoints of kneading stability and physical property stability of the blended rubber.

In the second invention, the coagulated matter turned into crumbs described above is preferably further subjected to the creper step and/or the shredder step in terms of uniform drying before drying.

In the second invention, a viscosity stabilizer for a natural rubber is preferably added to the natural rubber mixture (component C) obtained.

Components such as amino acid which accelerates gelation in addition to the useful components described above are contained in a natural rubber latex gathered, and therefore the natural rubber latex can be endowed with an excellent viscosity stabilizing effect by adding a viscosity stabilizer to the natural rubber latex gathered, to be specific, kneading it by means of a mixer, a kneading machine and the like.

Timing and means for adding the viscosity stabilizer for a natural rubber include, for example, adding before coagulating the natural rubber latex, dipping or spraying by means of a sprayer before drying or adding by means of a dry pre-breaker after drying.

The usable viscosity stabilizer for a natural rubber includes, for example, semicarbazide, dimedone (1,1-dimethylcyclohexane-3,5-dione) and a hydrazide compound represented by the following Formula (I):

$$R\text{-}CONHNH_2 \qquad\qquad (I)$$

wherein R in Formula (I) represents an alkyl group having 1 to 30 carbon atoms, a cycloalkyl group having 3 to 30 carbon atoms or an aryl group.

The hydrazide compound represented by Formula (I) described above includes, for example, at least one selected from the group consisting of acetohydrazide, propionohydrazide, butyrohydrazide, laurohydrazide, palmitohydrazide, stearohydrazide, cyclopropane carbohydrazide, cyclohexane carbohydrazide, cycloheptane carbohydrazide, benzohydrazide ($C_6H_5\text{-}CONHNH_2$), o-, m-, p-toluohydrazide, lactohydrazide, phthalohydrazide, p-methoxybenzohydrazide, 3,5-dimethylbenzohydrazide and 1-naphthohydrazide.

The preferred viscosity stabilizer for a natural rubber is fatty acid hydrazide from a view point providing excellent dispersibility and further improved viscosity stabilizing effect, and in particular, laurohydrazide and propionohydrazide are preferred.

In the second invention, the various viscosity stabilizers for a natural rubber described above can be used alone or in combination of two or more kinds thereof, and a blending amount thereof is 0.001 part by weight or more, preferably 0.01 to 3 parts by weight per 100 parts by weight of the NR latex dried component.

Controlling of those viscosity stabilizers to 0.001 part by weight or more makes it possible to exhibit further viscosity stabilizing effect and obtain further effects which are the objects of the present invention without bringing about adverse effects such as reduction in the rubber physical properties.

In the rubber composition of the second invention, the natural rubber mixture [component (C)] has a content controlled to 0.5 to 100 % by weight, preferably 2 to 80 % by weight and more preferably 5 to 70 % by weight based on the total amount of the whole rubber components.

If the above natural rubber mixture [component (C)] has a content of less than 0.5 % by weight, the heat aging resistance-improving effect is lost, and therefore it is not preferred.

In the rubber composition of the second invention thus constituted, a component accelerating the vulcanizing speed is further reduced while keeping a long-term heat aging resistance-improving component contained in the serum liquid (natural rubber serum) which has not been introduced into the natural rubber without coagulating the natural rubber latex after tapping, and thus obtained is the rubber composition blended with the rubber component containing the natural rubber mixture (component A) having excellent characteristics.

In the second invention, a rubber component coagulated matter which provides the natural rubber mixture [component (C)] having the characteristics described above can be produced by the simple steps.

Further, in the rubber composition comprising the natural rubber mixture [component (C)] obtained by adding a viscosity stabilizer for a natural rubber to a natural rubber latex after tapping, obtained is the rubber composition comprising the natural rubber mixture (component A) having a higher molecular weight, a smaller polymer gel content and an excellent viscosity stabilizing effect.

The rubber composition of the second invention can be blended with optional components such as a filler, a reinforcing agent, a softener, a vulcanizing agent, a vulcanization accelerator, a vulcanization accelerator activator, an antioxidant and a resin. It can suitably be used for various rubber products including a rubber for a tire.

Examples

The present invention shall more specifically and detailedly be explained below with reference to examples and comparative examples, but the present invention shall not be restricted to the examples described below.

Examples 1 to 2, Comparative Examples 1 to 4 and Reference Example, the first invention

Rubber compositions having blend compositions shown in the following Table 1 were prepared. Coagulated matters A to D shown in the following Table 1 were prepared in the following manners and used. A blending unit of the blend compositions shown in the following Table 1 is "part by weight".

The rubber compositions obtained in Examples 1 to 2, Comparative Examples 1 to 4 and Reference Example were evaluated for a Mooney scorch time (MST), a heat build-up index and a heat aging resistance (heat aging resistance index).

The results thereof are shown in the following Table 1.

Preparation of coagulated matters A to D

Coagulated matter A:

A latex of clone species GT-1 treated with $NH_3$ 0.4 wt % was coagulated by adding formic acid so as to adjust the pH to 4.7 and then left standing for 8 hours, and it was subjected to a crusher and a creper (without water) three times and once a shredder (without water) and dried at 110°C for 210 minutes in a bucket dryer. The coagulated matter A had a moisture content of 0.4 %.

Coagulated matter B:

The latex of clone species GT-1 treated with $NH_3$ 0.4 wt % was dried by treating for one minute by means of a drum dryer having a surface temperature of 135°C and a roll space controlled to 0.1 mm. The above coagulated matter B had a moisture content of 0.5 %.

Coagulated matter C:

The latex of clone species GT-1 treated with $NH_3$ 0.4 wt % was treated for 20 seconds by means of a drum dryer having a surface temperature of 135° C and a roll space controlled to 0.3 mm to obtain a coagulated matter having a moisture content of 15 %. The coagulated matter was subjected to the creper (without water) three times and once the shredder (without water) and dried at 110° C for 210 minutes in the bucket dryer. The coagulated matter C had a moisture content of 0.5 %.

Coagulated matter D:

The latex of clone species GT-1 treated with $NH_3$ 0.4 wt % was centrifugally separated at a revolution of 7500 rpm by means of a latex separator SLP-3000 (manufactured by Saito Centrifugal Machine Co., Ltd.), and a serum thus obtained was treated for 20 seconds by means of the drum dryer having a surface temperature of 135°C and a roll space controlled to 0.3 mm to obtain a coagulated matter of a moisture content 15 %. The coagulated matter was subjected to the creper (without water) three times and once the shredder (without water) and dried at 110°C for 210 minutes in the bucket dryer. The coagulated matter C had a moisture content of 0.5 %.

Method for evaluating Mooney scorch time (MST):

A value of $t_5$ obtained by measuring at 125°C according to JIS K6300-1994 was shown by an index, wherein the value of Comparative Example 1 was set to 100. It is shown that the smaller the numerical value is, the shorter the Mooney scorch time is and the worse the workability is.

Method for measuring heat build-up index:

The resilience at room temperature (25°C) was measured and shown by an index, wherein the value of Comparative Example 4 was set to 100. It is meant that the larger the numerical value is, the lower the heat build-up is.

Method for evaluating heat aging resistance:

Evaluated by a heat aging resistance index calculated according to the following equation. It is shown that the higher the index value is, the better the heat aging resistance is.

$$\text{Heat aging resistance index} = [(\text{tensile rupture strength}$$

$$\text{after subjecting a vulcanized sheet to heat aging at}$$

$$100°\text{C for 72 hours in a gear oven})/(\text{ rupture strength of}$$

$$\text{the sheet subjected to nothing})] \times 100$$

The rupture strength was measured according to JIS K6251-1993 using a JIS No. 3 dumbbell specimen.

Table 1

| | Comparative Example | | | | Example 1 | Reference Example | Example 2 |
|---|---|---|---|---|---|---|---|
| | 1 | 2 | 3 | 4 | | | |
| IR2200‡1 | 100 | 90 | 90 | 90 | 90 | 90 | 90 |
| Coagulated matter A | - | 10 | - | - | - | - | - |
| Coagulated matter B | - | - | 10 | - | - | - | - |
| Coagulated matter C | - | - | - | 10 | - | - | - |
| Coagulated matter D | - | - | - | - | 10 | 10 | 10 |
| Carbon black N110 | 50 | 50 | 50 | 50 | 50 | 50 | 50 |
| Aromatic oil | 3 | 3 | 3 | 3 | 3 | 3 | 3 |
| Resin‡2 | 1 | 1 | 1 | 1 | 1 | 1 | 1 |
| Stearic acid | 2 | 2 | 2 | 2 | 2 | 2 | 2 |
| Antioxidant (6C)‡3 | 1 | 1 | 1 | 1 | 1 | - | 0.5 |
| Zinc oxide | 3 | 3 | 3 | 3 | 3 | 3 | 3 |
| Vulcanization accelerator (DZ)‡4 | 0.8 | 0.8 | 0.8 | 0.8 | 0.8 | 0.8 | 0.8 |
| Sulfur | 1 | 1 | 1 | 1 | 1 | 1 | 1 |
| Retarder (PVI)‡5 | 0.5 | 0.5 | 0.5 | 0.5 | 0.5 | 0.5 | 0.5 |
| MST | 28.1 | 27.0 | 14.0 | 27.0 | 24.0 | 36.0 | 32.0 |
| Heat build-up index | 100 | 99 | 96 | 100 | 101 | 102 | 101 |
| Heat aging resistance index | 43 | 45 | 52 | 46 | 52 | 42 | 51 |

‡1: Isoprene rubber (manufactured by JSR Corporation.)

‡2: C5 base petroleum resin (Nisseki Neo Polymer 120, manufactured by Nippon Petrochemicals Co., Ltd.)

‡3: N-phenyl-N'-(1,3-dimethylbutyl)-p-phenylenediamine

‡4: N,N-dicyclohexyl-2-benzothiasulfeneamide

‡5: N-(cyclohexylthio)phthalimide

EP 1 498 451 A1

As apparent from the results shown in Table 1 described above, the rubber composition prepared in Comparative Example 1 was not blended with the coagulated matter. Also, it became clear that NR coagulated with an acid was not effective to aging as was the case with Comparative Example 2. Further, it was found that NR dried directly by means of a drum dryer improved the heat aging resistance but provided the short scorch time as was the case with Comparative Example 3. It was found that in Comparative Example 4, coagulation with an acid improved the MST but was not effective to aging.

In contrast with this, it was found that NR which was coagulated and semi-dried by means of a drum dryer and then dried by batch was improved in the scorch property as was the case with Example 1 and provided the good heat aging resistance together therewith.

Further, in Reference Example in which the antioxidant (6C) was not blended, it was found that an effect was not given by the serum. It was found that the rubber composition prepared in Example 1 in which the coagulated matter D was blended was improved in the scorching property and excellent in the heat aging resistance. It was found that in Example 2 in which 10 parts by weight of the coagulated matter D was blended while reducing a blending amount of the antioxidant (6C) to a half, the heat aging resistance was better than that in Comparative Example 1 and that even if a blending amount of the antioxidant (6C) was cut to a half, the similar heat aging resistant effect to that in Example 1 was provided.

Example 3 and Comparative Examples 5 to 7, the first invention

Rubber compositions having blend compositions shown in the following Table 2 were prepared. Rubbers A to D shown in the following Table 2 were prepared in the following manners and used. A blending unit of the blend compositions shown in the following Table 2 is "part by weight".

The rubber compositions obtained in Example 3 and Comparative Examples 5 to 7 were evaluated for a Mooney scorch time (MST), a heat build-up index and a heat aging resistance (heat aging resistance index) by the methods described above.

The results thereof are shown in the following Table 2.

Rubber A:

NR (RSS #3, masticated rubber)

Rubber B:

A latex of clone species GT-1 treated with $NH_3$ 0.4 wt % was dried by treating for 40 seconds by means of a drum dryer having a surface temperature of 135°C and a roll space controlled to 0.1 mm. The coagulated matter after drying had a moisture content of 0.6 %.

Rubber C:

The latex of clone species GT-1 treated with $NH_3$ 0.4 wt % was centrifugally separated at a revolution of 7500 rpm by means of a latex separator SLP-3000 (manufactured by Saito Centrifugal Machine Co., Ltd.), and the condensed latex thus obtained was diluted to DRC 20 % with water. Then, formic acid was added to adjust the pH to 4.7 to coagulate the latex, and it was left standing for a night. Then, it was subjected to a crusher and a creper (without water) three times and once a shredder (without water) and treated under the drying conditions of 110°C and 210 minutes. The coagulated matter after drying had a moisture content of 0.5 %.

Rubber D:

The latex of clone species GT-1 treated with $NH_3$ 0.4 wt % was centrifugally separated at a revolution of 7500 rpm by means of the latex separator SLP-3000 (manufactured by Saito Centrifugal Machine Co., Ltd.), and the condensed latex thus obtained was treated for 20 seconds by means of the drum dryer having a surface temperature of 135°C and a roll space controlled to 0.3 mm. The coagulated matter after drying had a moisture content of 15.0 %. The coagulated matter was subjected to the creper (without water) three times and once the shredder (without water) and treated under the drying conditions of 110°C and 210 minutes. The coagulated matter after drying had a moisture content of 0.4 %.

Table 2

| | Comparative Example | | | Example 3 |
|---|---|---|---|---|
| | 5 | 6 | 7 | |
| Rubber A (RSS #3) | 70 | - | - | - |
| Rubber B | - | 70 | - | - |
| Rubber C | - | - | 70 | - |
| Rubber D | - | - | - | 70 |
| BR | 30 | 30 | 30 | 30 |
| Carbon black N110 | 50 | 50 | 50 | 50 |
| Aromatic oil | 3 | 3 | 3 | 3 |
| Resin*2 | 1 | 1 | 1 | 1 |
| Stearic acid | 2 | 2 | 2 | 2 |
| Antioxidant (6C)*3 | 1 | 1 | 1 | 1 |
| Zinc oxide | 3 | 3 | 3 | 3 |
| Vulcanization accelerator (DZ)*4 | 0.8 | 0.8 | 0.8 | 0.8 |
| Sulfur | 1 | 1 | 1 | 1 |
| Retarder (PVI)*5 | 0.5 | 0.5 | 0.5 | 0.5 |
| MST | 32 | 11 | 33 | 28 |
| Heat build-up index | 100 | 79 | 102 | 106 |
| Heat aging resistance index | 43 | 52 | 41 | 50 |

*2: C5 base petroleum resin (Nisseki Neo Polymer 120, manufactured by Nippon Petrochemicals Co., Ltd.)

*3: N-phenyl-N'-(1,3-dimethylbutyl)-p-phenylenediamine

*4: N,N-dicyclohexyl-2-benzothiasulfeneamide

*5: N-(cyclohexylthio)phthalimide

As apparent from the results shown in Table 2 described above, it was found that in Example 3 falling in the scope of the present invention, the heat build-up and the heat aging resistance were excellent as compared with those in Comparative Examples 5 to 7 falling outside the scope of the present invention.

In Example 3, the heat build-up which was apparently better than that of RSS in Comparative Example 5 which was a conventional example, and the heat aging resistance was provided over a long period of time. It became clear that the whole substitution or partial substitution of the above rubber for conventional NR made it possible to improve the heat build-up and the heat resistance.

Examples 4 to 8 and Comparative Examples 8 to 10, the second invention

Rubber compositions having blend compositions shown in the following Table 3 were prepared. Rubbers E to K shown in the following Table 3 were prepared in the following manners and used. A blending unit of the blend compositions shown in the following Table 3 is "part by weight".

The rubber compositions obtained in Examples 4 to 8 and Comparative Examples 8 to 10 were evaluated for a Mooney scorch time (MST) and a heat aging resistance (heat aging resistance index) by the methods described above.

The results thereof are shown in the following Table 3.

Preparation of rubbers E to K

Rubber E:

NR (RSS #3, masticated rubber) was used (corresponding to rubber A of the first invention described above).

Rubber F:

A latex of clone species GT-1 treated with $NH_3$ 0.4 wt % was dried by treating for 40 seconds by means of a drum dryer having a surface temperature of 135°C and a roll space controlled to 0.1 mm. The coagulated matter after drying had a moisture content of 0.6 %.

Rubber G:

The latex of clone species GT-1 treated with $NH_3$ 0.4 wt % was centrifugally separated at a revolution of 7500 rpm by means of a latex separator SLP-3000 (manufactured by Saito Centrifugal Machine Co., Ltd.), and the resulting condensed latex thus obtained was dried by treating for 40 seconds by means of the drum dryer having a surface temperature of 135°C and a roll space controlled to 0.1 mm. The coagulated matter after drying had a moisture content of 0.4 %.

Rubber H:

The latex of clone species GT-1 treated with $NH_3$ 0.4 wt % was treated for 20 seconds by means of the drum dryer having a surface temperature of 135°C and a roll space controlled to 0.3 mm to obtain a coagulated matter having a moisture content of 23 %. The coagulated matter was subjected to a creper (without water) three times and once a shredder (without water) and then dried by treating at 110°C for 210 minutes in a bucket dryer. The coagulated matter after drying had a moisture content of 0.5 %.

Rubber I:

The latex of clone species GT-1 treated with $NH_3$ 0.4 wt % was centrifugally separated at a revolution of 7500 rpm by means of the latex separator SLP-3000 (manufactured by Saito Centrifugal Machine Co., Ltd.), and the condensed latex (rubber content: 65 %) thus obtained was treated for 20 seconds by means of the drum dryer having a surface temperature of 135°C and a roll space controlled to 0.3 mm to obtain a coagulated matter having a moisture content of 15 %. The coagulated matter was subjected to the creper (without water) three times and once the shredder (without water) and dried by treating at 110°C for 210 minutes in the bucket dryer. The coagulated matter after drying had a moisture content of 0.4 %.

Rubber J:

The latex of clone species GT-1 treated with $NH_3$ 0.4 wt % was centrifugally separated at a revolution of 7500 rpm by means of the latex separator SLP-3000 (manufactured by Saito Centrifugal Machine Co., Ltd.), and the condensed latex (rubber content: 65 %) and the serum latex (rubber content: 5 %) thus obtained were mixed in a proportion of 4 : 6. The mixed latex was treated for 20 seconds by means of the drum dryer having a surface temperature of 135°C and a roll space controlled to 0.3 mm to obtain a coagulated matter having a moisture content of 23 %. The coagulated matter was subjected to the creper (without water) three times and once the shredder (without water) and dried by treating at 110° C for 210 minutes in the bucket dryer. The coagulated matter after drying had a moisture content of 0.7 %.

Rubber K:

The latex of clone species GT-1 treated with $NH_3$ 0.4 wt % was centrifugally separated at a revolution of 7500 rpm by means of the latex separator SLP-3000 (manufactured by Saito Centrifugal Machine Co., Ltd.), and the condensed latex (rubber content: 65 %) and the serum latex (rubber content: 5 %) thus obtained were mixed in a proportion of 2 : 8. The mixed latex was dried at 135° C for 2 minutes by means of a thin film distillation dryer to obtain a coagulated matter having a moisture content of 8 %. The coagulated matter was subjected to the creper (without water) three times and once the shredder (without water) and dried by treating at 110° C for 210 minutes in the bucket dryer. The coagulated matter after drying had a moisture content of 0.8 %.

Table 3

| | Comparative Example | | | Example | | | | |
|---|---|---|---|---|---|---|---|---|
| | 8 | 9 | 10 | 4 | 5 | 6 | 7 | 8 |
| Rubber E | 100 | - | - | - | - | - | - | - |
| Rubber F | - | 100 | - | - | - | - | - | - |
| Rubber G | - | - | 100 | - | - | - | - | - |
| Rubber H | - | - | - | 100 | - | - | - | - |
| Rubber I | - | - | - | - | 100 | - | - | - |
| Rubber J | - | - | - | - | - | 100 | - | 70 |
| Rubber K | - | - | - | - | - | - | 50 | - |
| IR2200*1 | - | - | - | - | - | - | 50 | 30 |
| Carbon black N110 | 50 | 50 | 50 | 50 | 50 | 50 | 50 | 50 |
| Aromatic oil | 3 | 3 | 3 | 3 | 3 | 3 | 3 | 3 |
| Resin*2 | 1 | 1 | 1 | 1 | 1 | 1 | 1 | 1 |
| Stearic acid | 2 | 2 | 2 | 2 | 2 | 2 | 2 | 2 |
| Antioxidant (6C)*3 | 1 | 1 | 1 | 1 | 1 | 1 | 1 | 1 |
| Zinc oxide | 3 | 3 | 3 | 3 | 3 | 3 | 3 | 3 |
| Vulcanization accelerator (DZ)*4 | 0.8 | 0.8 | 0.8 | 0.8 | 0.8 | 0.8 | 0.8 | 0.8 |
| Sulfur | 1 | 1 | 1 | 1 | 1 | 1 | 1 | 1 |
| Retarder (PVI)*5 | 0.8 | 0.8 | 0.8 | 0.8 | 0.8 | 0.8 | 0.8 | 0.8 |
| MST | 31 | 8 | 14 | 19 | 27 | 25 | 28 | 28 |
| Heat aging resistance index | 43 | 52 | 48 | 51 | 48 | 50 | 49 | 49 |

*1: Isoprene rubber (manufactured by JSR Corporation.)

*2: C5 base petroleum resin (Nisseki Neo Polymer 120, manufactured by Nippon Petrochemicals Co., Ltd.)

*3: N-phenyl-N'-(1,3-dimethylbutyl)-p-phenylenediamine

*4: N,N-dicyclohexyl-2-benzothiasulfeneamide

*5: N-(cyclohexylthio)phthalimide

As apparent from the results shown in Table 3 described above, it was found that in Examples 4 to 8 falling in the scope of the second invention, the scorching property could be improved while maintaining the heat aging resistance as compared with those in Comparative Examples 8 to 10 falling outside the scope of the second invention.

To specifically observe the comparative examples, conventional NR (RSS #3, masticated rubber) was used in Comparative Example 8, and the heat aging resistance was inferior. In Comparative Example 9, a natural rubber latex was dried by means of a drum dryer, and the scorching property was inferior. In Comparative Example 10, a condensed rubber latex centrifugally separated was dried by means of the drum dryer, and it was found that the scorching property was still inferior as well in this case.

In contrast with this, used in Example 4 was a natural rubber obtained by coagulating a natural rubber latex by vaporization by means of the drum dryer, then turning it into crumbs and drying, and used in Example 5 was a natural rubber obtained by coagulating a condensed natural rubber latex centrifugally separated, then turning it into crumbs and drying. Used in Example 6 was a natural rubber obtained by coagulating a mixture of a condensed natural rubber latex centrifugally separated with a serum latex, then turning it into crumbs and drying. Example 7 was an example in which the rubber described above was blended with an IR rubber, and Example 8 was an example in which a natural rubber obtained from a mixed condensed latex having a large serum latex content was blended with an IR rubber. It was found that the scorching property could be improved while maintaining the heat aging resistance in the above cases.

Industrial Applicability

As described above, provided according to the first invention are a rubber composition in which a component having a vulcanization scorching property which has so far exerted an adverse effect is reduced to display the physical properties of a natural rubber at maximum and in which blended is a rubber component-containing coagulated matter containing a serum (serum component) of natural rubber that is a useful component such as an aging resistant component which has not so far been introduced into a natural rubber and a production process for the rubber component-containing coagulated matter.

Further, provided according to the second invention are a rubber composition in which a component accelerating a vulcanizing speed is further reduced while keeping a long-term heat aging resistance-improving component contained in a serum (natural rubber serum) which has not so far been introduced into a natural rubber and in which blended is a rubber component containing a natural rubber mixture having an excellent characteristic and a production process for a rubber component-coagulated matter which provides the natural rubber mixture having the characteristic described above.

**Claims**

1.  A rubber composition blended with a rubber component-containing coagulated matter, wherein a rubber component is blended, and the rubber component comprises a component (A) comprising at least one of a natural rubber and a diene base synthetic rubber and a component (B) comprising a rubber component-containing coagulated matter obtained by drying and coagulating a serum of natural rubber obtained by centrifugally separating a natural rubber latex.

2.  The rubber composition blended with a rubber component-containing coagulated matter as described in claim 1, wherein said component (A) is at least one selected from the group consisting of a natural rubber, an isoprene rubber, a styrene-butadiene copolymer rubber, a styrene-isoprene copolymer rubber and a butadiene rubber.

3.  The rubber composition blended with a rubber component-containing coagulated matter as described in claim 1 or 2, wherein an amount of said component (B) is 0.5 to 40 % by weight based on the whole rubber components.

4.  The rubber composition blended with a rubber component-containing coagulated matter as described in any of claims 1 to 3, wherein said component (A) is the styrene-isoprene copolymer rubber, and an amine base antioxidant is further blended.

5.  A rubber composition, wherein a rubber component comprising a natural rubber is blended, and at least a part of the natural rubber is a natural rubber mixture [component (C)] obtained by coagulating a natural rubber latex at 90°C or higher, then turning it into crumbs and drying.

6.  The rubber composition as described in claim 5, wherein said rubber component further comprises a diene base synthetic rubber.

7.  The rubber composition as described in claim 5 or 6, wherein said diene base synthetic rubber is at least one selected from the group consisting of an isoprene rubber, a styrene-butadiene copolymer rubber and a butadiene rubber.

8.  The rubber composition as described in any of claims 5 to 7, wherein an amount of said component (C) is 0.5 to 100 % by weight based on the whole rubber components.

9.  The rubber composition as described in any of claims 5 to 8, wherein a viscosity stabilizer for a natural rubber is further added to said component (C).

10. The rubber composition as described in claim 9, wherein said viscosity stabilizer is a hydrazide compound represented by the following Formula (I):

$$R\text{-}CONHNH_2 \tag{I}$$

wherein R in Formula (I) represents an alkyl group having 1 to 30 carbon atoms, a cycloalkyl group having 3 to 30 carbon atoms or an aryl group.

11. A production process for a rubber component-containing coagulated matter, comprising a step of centrifugally separating a natural rubber latex, a step of coagulating a resulting serum and a step of drying the coagulated serum.

12. A production process for a rubber component-containing coagulated matter, comprising a step of coagulating a natural rubber latex by vaporization, a step of turning a resulting coagulated matter into crumbs and a step of drying the coagulated matter turned into crumbs.

13. The production process for a rubber component-containing coagulated matter as described in claim 11 or 12, wherein said coagulating step is carried out by means of any of a thin film distillation dryer, a drum dryer and a belt dryer.

14. The production process for a rubber component-containing coagulated matter as described in any of claims 11 to 13, wherein said coagulating step is carried out at 90°C or higher.

15. The production process for a rubber component-containing coagulated matter as described in any of claims 11 to 14, wherein said drying step is carried out by means of a bucket type dryer or a belt type dryer.

16. The production process for a rubber component-containing coagulated matter as described in any of claims 11 to 15, further comprising a creper step and/or a shredder step.

## INTERNATIONAL SEARCH REPORT

| International application No. |
| --- |
| PCT/JP03/05197 |

**A. CLASSIFICATION OF SUBJECT MATTER**
Int.Cl$^7$  C08L7/00, C08L9/00, C08K5/00, C08K5/17, C01C1/10

According to International Patent Classification (IPC) or to both national classification and IPC

**B.  FIELDS SEARCHED**

Minimum documentation searched (classification system followed by classification symbols)
Int.Cl$^7$  C08L7/00-9/10, C08C1/00-1/16, C08J3/00-3/16, C08K5/00,
C08K5/17

Documentation searched other than minimum documentation to the extent that such documents are included in the fields searched

| | | | |
| --- | --- | --- | --- |
| Jitsuyo Shinan Koho | 1926-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| X<br>Y | JP 1-165637 A  (The Yokohama Rubber Co., Ltd.),<br>29 June, 1989 (29.06.89),<br>Claims<br>(Family: none) | 1-4<br>11,13-16 |
| X<br>Y | JP 62-22837 A  (The Yokohama Rubber Co., Ltd.),<br>31 January, 1987 (31.01.87),<br>Claims<br>& GB 2178044 A | 1-3<br>11,13-16 |
| X<br>Y | Edited by The Society of Rubber Industry , Japan<br>"Gomu Kogyo Binran", Maruzen Shuppan Kabushiki<br>Kaisha, 20 February, 1949 (20.02.49), page 19 | 5,8,12,14<br>6-7,9-10,<br>13,15-16 |

| [X] | Further documents are listed in the continuation of Box C. | [ ] | See patent family annex. |
| --- | --- | --- | --- |

| * Special categories of cited documents: | "T" later document published after the international filing date or |
| --- | --- |
| "A" document defining the general state of the art which is not considered to be of particular relevance | priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>09 July, 2003 (09.07.03) | Date of mailing of the international search report<br>22 July, 2003 (22.07.03) |
| --- | --- |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.

PCT/JP03/05197

C (Continuation). DOCUMENTS CONSIDERED TO BE RELEVANT

| Category* | Citation of document, with indication, where appropriate, of the relevant passages | Relevant to claim No. |
|---|---|---|
| X | JP 6-322004 A  (Kao Corp.), | 5,8,12,14 |
| Y | 22 November, 1994 (22.11.94), | 6-7,9-10, |
| | Claims; Par. No. [0017]; examples | 13,15-16 |
| | & EP 624601 A          & US 5585459 A | |
| | | |
| Y | JP 2001-342261 A  (Sumitomo Rubber Industries, | 6-7 |
| | Ltd.), | |
| | 11 December, 2001 (11.12.01), | |
| | Claims; Par. No. [0013] | |
| | (Family: none) | |
| | | |
| Y | JP 2001-354703 A  (Bridgestone Corp.), | 9-10 |
| | 25 December, 2001 (25.12.01), | |
| | Claims | |
| | (Family: none) | |
| | | |
| Y | JP 11-71409 A  (Sumitomo Rubber Industries, Ltd.), | 11,13-16 |
| | 16 March, 1999 (16.03.99), | |
| | Claims | |
| | & US 6025451 A | |

Form PCT/ISA/210 (continuation of second sheet) (July 1998)

# INTERNATIONAL SEARCH REPORT

| International application No. |
| --- |
| PCT/JP03/05197 |

**Box I   Observations where certain claims were found unsearchable (Continuation of item 2 of first sheet)**

This international search report has not been established in respect of certain claims under Article 17(2)(a) for the following reasons:

1. ☐ Claims Nos.:

   because they relate to subject matter not required to be searched by this Authority, namely:

2. ☐ Claims Nos.:

   because they relate to parts of the international application that do not comply with the prescribed requirements to such an extent that no meaningful international search can be carried out, specifically:

3. ☐ Claims Nos.:

   because they are dependent claims and are not drafted in accordance with the second and third sentences of Rule 6.4(a).

**Box II   Observations where unity of invention is lacking (Continuation of item 3 of first sheet)**

This International Searching Authority found multiple inventions in this international application, as follows:

   I.    Claims 1-4 and 11, and parts of claims 13-16 referring to claim 11 relate to a rubber-containing coagulum obtained by subjecting a serum of a natural rubber latex to coagulation and drying.

   II.    Claims 5-10 and 12, and parts of claims 13-16 referring to claim 12 relate to a rubber-containing coagulum obtained by coagulating a natural rubber latex by evaporation and drying the obtained coagulum. The two groups of inventions are not considered as relating to a group of inventions so linked as to form a single general inventive concept.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐  The additional search fees were accompanied by the applicant's protest.

   ☐  No protest accompanied the payment of additional search fees.

Form PCT/ISA/210 (continuation of first sheet (1)) (July 1998)